# EUROPÄISCHE PATENTSCHRIFT

(11) **EP 1 687 592 B1**
(45) Veröffentlichungstag und Bekanntmachung des Hinweises auf die Patenterteilung: **18.07.2007**
(21) Anmeldenummer: 04798118.8
(22) Anmeldetag: 24.11.2004
(51) Int. Cl.: G01D 5/20

(54) **VORRICHTUNG ZUM ERFASSEN VON BEWEGUNGEN UND/ODER POSITIONEN EINES GEGENSTANDES**
DEVICE FOR THE DETECTION OF MOVEMENTS AND/OR POSITIONS OF AN OBJECT
DISPOSITIF POUR DETECTER DES MOUVEMENTS ET/OU POSITIONS D'UN OBJET

(30) Priorität: 26.11.2003 DE 10355859; 11.11.2004 DE 102004055626
(43) Veröffentlichungstag der Anmeldung: 09.08.2006
(73) Patentinhaber: Baumer Hübner GmbH, 10967 Berlin (DE)
(72) Erfinder: WILHELMY, Lothar, 14195 Berlin (DE)
(74) Vertreter: Grünecker, Kinkeldey, Stockmair & Schwanhäusser Anwaltssozietät
(86) Internationale Anmeldenummer: PCT/EP2004/013547
(87) Internationale Veröffentlichungsnummer: WO 2005/052505

(56) Entgegenhaltungen:
- US-A1- 2003 094 945
- US-B1- 6 249 118

## Beschreibung

### Technisches Gebiet

Die Erfindung betrifft eine Vorrichtung zum Erfassen von Bewegungen und/oder Positionen eines Gegenstandes, bei der in Abhängigkeit von den Bewegungen und/oder Positionen des Gegenstandes in mindestens einer Spule durch mindestens ein, eine Relativbewegung zur Spule ausführendes und diese beaufschlagendes Magnetfeld jeweils ein Spannungsimpuls erzeugt wird, wobei die Spule mindestens partiell eine aus magnetisch leitendem Material bestehende Feder umschließt, die unter dem Einfluß des Magnetfeldes aufgrund des Reluktanz-Effektes eine Hin- und Herbewegung ausführt.

### Stand der Technik

Eine als Umdrehungszähler ausgebildete Vorrichtung der vorstehenden Art ist aus der US 2003/094945 A1 bekannt. Bei der bekannten Vorrichtung sind über den Umfang der Kreisbahn eines tangential zur Kreisbahn orientierten, umlaufenden Magneten drei Reedkontakte verteilt, die aus jeweils einer Glasampulle bestehen, in die zwei sich mit ihren Enden überlappende, federnde Kontaktzungen eingeschmolzen sind. Nähert sich der Magnet einem der Reedkontakte so durchsetzt sein Magnetfeld die Kontaktzungen, wobei es mit zunehmender Annäherung zu einer Steigerung des Magnetfeldes kommt. Bei Erreichen einer bestimmten Stärke des Magnetfeldes überwinden die Anziehungskräfte zwischen den Kontaktzungen deren Federkräfte und die Enden der Kontaktzungen bewegen sich schlagartig aufeinander zu. Mit dem Schließen des Kontaktes zwischen den Kontaktzungen geht eine schnelle Änderung des magnetischen Feldes einher, die in der den jeweiligen Reedkontakt umschließenden Spule einen Spannungsimpuls generiert. Auf diese Weise, soll erreicht werden, daß man auch bei niedrigen Drehzahlen für eine elektronische Auswertung ausreichend starke Signale erhält.

Ein durch eine schlagartige Magnetfeldänderung generiertes Signal erhält man auch bei einer aus der US 6,249,118 B1 bekannten Vorrichtung, bei der das Ende eines als Polschuh eines Magneten ausgebildeten Stößels mit Zähnen eines gezahnten Rades zusammen wirkt.

Neben den zuvor bekannten Vorrichtungen, bei denen in mindestens einer Spule durch das Magnetfeld jeweils eines einzelnen Magneten ein Spanungsimpuls genriert wird, sind auch Vorrichtungen bekannt, bei denen zur Generierung von Spannungsimpulsen jeweils zwei Magnete verwendet werden. So ist aus der DE 102 19 303 C1 eine Vorrichtung bekannt, bei der der sich bewegende Gegenstand von einer Hohlwelle gebildet wird, an der schwenkbar ein Magnettragarm gelagert ist, der zwei in Richtung der Längsachse der Hohlwelle zueinander versetzte, gegenläufig gepolte Magnete trägt. Über den Umfang der Welle sind im Abstand von dieser Spulen angeordnet, die unter der Einwirkung der Felder der sie passierenden Magnete Spannungsimpulse an eine Auswerteeinheit liefern. Gehalten werden die Spulen von Spulenkerne bildenden Stegen, welche magnetisch leitende Ringsegmente mit einem die Ringsegmente und die Spulen umgebenden ebenfalls magnetisch leitenden Außenring verbinden. Zwischen den Spulen tragenden Ringsegmenten sind durch einen Spalt von diesen getrennte weitere Ringsegmente angeordnet, die ebenfalls mit dem Außenring in Verbindung stehen. Die Breite der Spalte zwischen den Ringsegmenten entspricht dabei im Wesentlichen der Breite der Magnete. Durch die geschilderte Ausgestaltung der bekannten Vorrichtung wird erreicht, dass es bei langsamen Drehzahlen der Welle im Bereich der Spalte zwischen den Ringsegmenten zu einer schnellen Schwenkbewegung des Magnettragarmes und infolgedessen auch hier zur Erzeugung eines kräftigen Spannungsimpulses in den Spulen kommt.

Schließlich ist aus der DE 43 42 069 A1 eine Vorrichtung mit zwei gegenpoligen Magneten bekannt, von denen der erste eine mit dem Gegenstand synchrone Bewegung ausführt. Diesem ersten Magneten ist ein zweiter Magnet entgegengesetzter Polung zugeordnet, der sich an einem Ende einer Blattfeder befindet, deren anderes Ende an einem ortfesten Halter befestigt ist. Der zweite Magnet ist oberhalb der Bewegungsbahn des ersten Magneten angeordnet. Nähert sich der erste Magnet bei langsamen Bewegungen dem zweiten Magneten, wird letzterer aufgrund seiner Gegenpoligkeit abgestoßen und es kommt zu einer Verformung der Blattfeder, die in ihr zu einer Ansammlung potentieller Federenergie führt. Da die Rückstellkraft der Blattfeder mit zunehmender Auslenkung zunimmt, wird bei fortschreitender Bewegung des ersten Magneten eine Auslenkposition erreicht, in der die Rückstellkraft der Blattfeder die Abstoßungskräfte zwischen dem ersten und dem zweiten Magneten übersteigt und es zum Zurückfedern der Blattfeder unter Abbau der in ihr angesammelten potentiellen Energie kommt. Um die beim Zurückfedern der Blattfeder frei werdende kinetische Energie in einen elektrischen Impuls umzuformen, ist auf der der Bahn des ersten Magneten abgewandten Seite des zweiten Magneten eine einen Eisenkern aufweisende Spule vorgesehen. Der den Eisenkern dieser Spule durchsetzende magnetischen Fluss wird bei der Zurückbewegung des zweiten Magneten in sehr kurzer Zeit verändert, so dass in der Spule ein Spannungsimpuls induziert wird.

### Darstellung der Erfindung

Mit der Erfindung wird das Ziel verfolgt, insbesondere bei langsamen Bewegungen eines Gegenstandes mit einfachen Mitteln möglichst große Spannungsimpulse in einer Spule zu induzieren

Gelöst wird die gestellte Aufgabe bei einer ersten Ausführungsform der Erfindung dadurch, dass das Magnetfeld von einem Magnetpaar aus zwei benachbarten und gegenpoligen Magneten erzeugt wird, die in Richtung der Bewegung des Gegenstandes hintereinander angeordnet sind und deren Längsachsen ebenso wie die Längsachse der Spule im Wesentlichen senkrecht zur Bewegungsrichtung des Gegenstandes orientiert sind, und dass die Hin- und Herbewegung der Feder einen den jeweiligen Spannungsimpuls erzeugenden Polaritätswechsel des Magnetfeldes in der Spule bewirkt.

Die erfindungsgemäße Vorrichtung zeichnet sich durch einen verblüffend einfachen, kompakten und wartungsfreien Aufbau aus. Bei ihr nimmt der jeweils voraneilende Magnet das freie Ende der Feder mit, da die Feldlinien dieses Magneten nach dem Reluktanz-Prinzip den Weg des geringsten magnetischen Widerstandes suchen. Wenn der Magnet sich weiter bewegt, so wird ein Zustand erreicht, bei dem die Rückstellkraft der Feder die magnetische Mitnahmekraft überwindet und die Feder in den Bereich des gegenpoligen, nacheilenden Magneten gelangt und von diesem mit zusätzlicher Beschleunigung eingefangen wird. Dies bedeutet, dass die Feder das in der Spule wirksame Magnetfeld schlagartig umpolt, wodurch in der die Feder umgebenden Spule ein kräftiger Spannungsimpuls erzeugt wird. Dieses Ummagnetisieren findet übrigens auch bei höheren Geschwindigkeiten des Gegenstandes statt, wenn die zwei benachbarten, ein Magnetpaar bildenden, gegenpoligen Magnete rasch an der Feder vorbeieilen, ohne dass die Feder aufgrund ihrer Trägheit noch nennenswerte Bewegungen ausführen kann.

Eine zweite Lösung der gestellten Aufgabe besteht darin, dass das Magnetfeld von einem Magnetpaar erzeugt wird, dessen Magnete in Richtung ihrer Relativbewegung zur Spule betrachtet nebeneinander angeordnet sind, wobei sowohl die Polflächen der Magnete als auch die den Polflächen der Magnete zugewandte Stirnfläche der Blattfeder im Wesentlichen als Rechtecke ausgebildet sind, deren Längsachsen einen Winkel α von weniger als 60° zur Tangente an die Bewegungsbahn der Magnete aufweisen, und dass die Hin- und Herbewegung der Feder einen den jeweiligen Spannungsimpuls erzeugenden Polaritätswechsel des Magnetfeldes in der Spule bewirkt.

Für die Alternativlösung spricht ein weiterer Vorteil, der darin besteht, dass Kraft- bzw. Drehmoment-Pulsationen auf ein vernachlässigbares Niveau reduziert werden. Derartige Pulsationen treten bei als Umdrehungszähler ausgebildeten Vorrichtungen gemäß der ersten Ausführungsform dann störend in Erscheinung, wenn die Drehzahl relativ kleiner Antriebe überwacht werden soll.

Weitere Merkmale und Einzelheiten der Erfindung ergeben sich aus den abhängigen Ansprüchen, den beigefügten, schematischen Zeichnungen und deren nachstehender Beschreibung.

### Kurze Beschreibung der Zeichnungen

Es zeigen:
- Fig.1: einen Schnitt durch eine erste, als Umdrehungszähler ausgebildete Vorrichtung,
- Fig. 2: einen Schnitt längs der Linie II - II in Fig. 1,
- Fig. 3 a-d: stark schematisiert das Zusammenspiel zwischen den zur Generierung eines Spannungsimpulses dienenden Teilen der Vorrichtung gemäß Fig. 1 und 2,
- Fig. 4: bei niedrigen Drehzahlen der Welle des Umdrehungszählers erzeugte Spannungsimpulse und ihre Abhängigkeit von der Drehrichtung,
- Fig. 5: bei hohen Drehzahlen der Welle des Umdrehungszählers erzeugte Spannungsimpulse und ihre Abhängigkeit von der Drehrichtung,
- Fig. 6: einen der Fig. 1 entsprechenden Schnitt durch eine leicht modifizierte Vorrichtung,
- Fig. 7: die elektrische Schaltung, mit der die in den Spulen der Vorrichtung gemäß Fig. 6 erzeugten Spannungen gleichgerichtet und einer elektronischen Zähl-Schaltung zugeführt werden,
- Fig. 8: einen der Fig. 6 entsprechenden Schnitt durch einen als sogenannter Außenläufer ausgebildeten Umdrehungszähler,
- Fig. 9: einen Schnitt längs der Linie IX - IX in Fig. 8,
- Fig. 10: die Seitenansicht der wesentlichen Teile einer in Verbindung mit einer Werkzeugmaschine genutzten Vorrichtung,
- Fig. 11: die Draufsicht auf die in Fig. 10 dargestellten Teile,
- Fig. 12: die Stirnansicht der in Fig. 10 dargestellten Teile,
- Fig. 13: einen Schnitt längs der Linie XIII - XIII in Fig. 11,
- Fig. 14 a-d: eine den Figuren 3a bis 3d entsprechende Darstellung des Zusammenspiels zwischen den Magneten und der Blattfeder bei der Vorrichtung gemäß der Alternativlösung,
- Fig. 15: die Lage der Magnete, der Blattfeder und einer die Blattfeder partiell umgebender Spule bei einem Umdrehungszähler gemäß der Alternativlösung,
- Fig. 16: im vergrößerten Maßstab einen Schnitt längs der Linie XVI - XVI in Fig. 15,
- Fig. 17: einen der Fig. 16 entsprechenden Schnitt durch eine erste modifizierte Ausführungsform,
- Fig. 18: einen der Fig. 16 entsprechenden Schnitt durch eine zweite modifizierte Ausführungsform,
- Fig. 19.: die bei niedrigen Drehzahlen der Welle des Umdrehungszählers gemäß Fig. 15 erzeugten Spannungsimpulse in Abhängigkeit von der Drehrichtung,
- Fig. 20: die elektrische Schaltung, mit der die in der Spule der Vorrichtung gemäß Fig. 15 erzeugten Spannungen gleichgerichtet und einer elektronischen Zähl-Schaltung zugeführt werden,
- Fig. 21: die Anordnung der Magnete und der von ihnen beaufschlagten Blattfeder bei einem sogenannten Multiturn-Geber,
- Fig. 22: ein Schaltbild zur Vorrichtung gemäß Fig. 21,
- Fig. 23: eine Vorrichtung, bei der die Blattfeder und die Spule nur zur Spannungsversorgung einer Mikroprozessorschaltung und zur Abfrage von Zählzwecken dienenden Sensoren genutzt wird und
- Fig. 24: ein zur Vorrichtung gemäß Fig. 23 gehörendes schematisches Schaltbild.

### Wege zur Ausführung der Erfindung

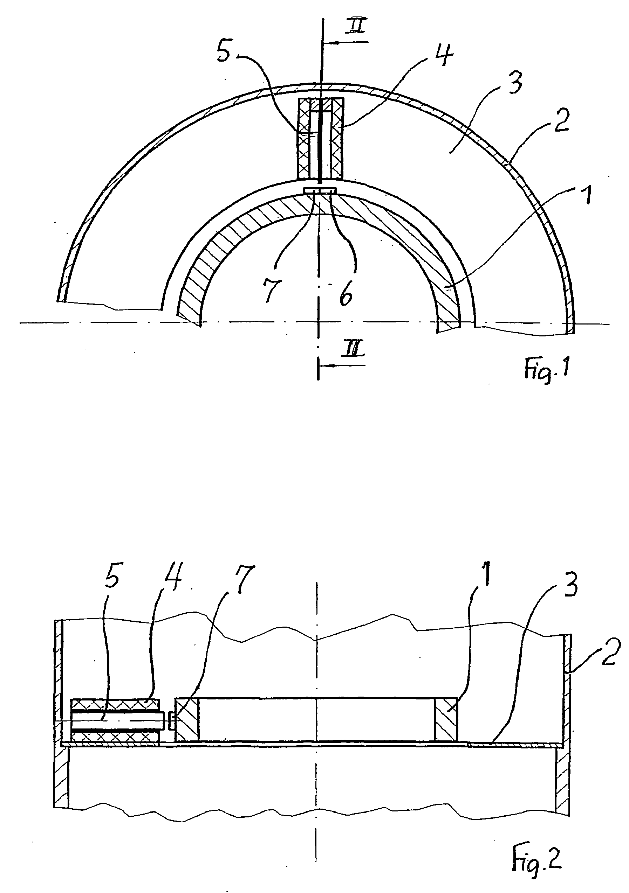

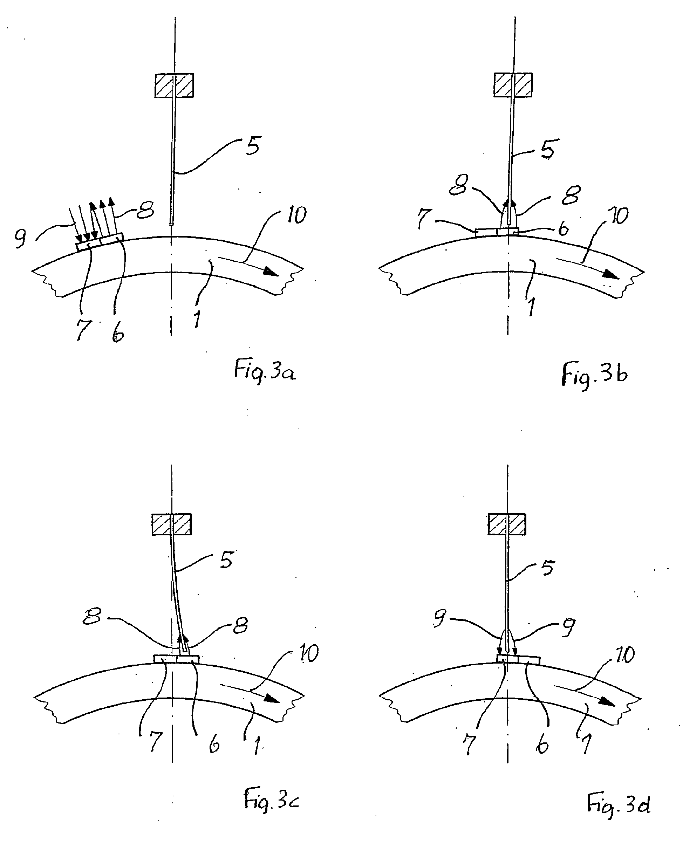

In Fig. 1 und 2 ist 1 die Hohlwelle eines Umdrehungszählers, die drehfest mit einer nicht dargestellten Welle verbindbar ist, deren Umdrehungen gezählt werden sollen. An einer mit der Außenwand 2 des Gehäuses des Umdrehungszählers verbundenen, ringförmigen Leiterplatte 3 ist eine Spule 4 befestigt, die eine magnetisch leitende Feder 5 umschließt. Die als Blattfeder ausgebildete Feder 5 steht mit ihrem einen Ende leicht über das untere Ende der Spule 4 vor und ist mit ihrem anderen Ende fest am oberen Ende der Spule 4 eingespannt. Der nicht eingespannte Teil der Feder 5 kann im Hohlraum der Spule 4 Hin- und Herbewegungen ausführen, wie in den Figuren 3a bis 3d noch beschrieben wird.

Am Umfang der Hohlwelle 1 des Umdrehungszählers sind in Drehrichtung der Hohlwelle 1 hintereinander zwei, ein Magnetpaar bildende gegenpolige Magnete 6 und 7 angeordnet, deren Nord-Südachsen ebenso wie die Längsachsen der Spule 4 senkrecht zur Bewegungsrichtung der Hohlwelle 1 verlaufen. Die magnetischen Felder der Magnete 6, 7 sind mit anderen Worten radial orientiert. Aufgrund der unterschiedlichen Polarität der Magnete 6, 7 verlaufen die Feldlinien 8, 9 in entgegengesetzte Richtungen.

In den Figuren 3a bis 3d - in denen die Spule 4 weggelassen wurde - ist gezeigt, wie sich die Feder 5 unter der Einwirkung der Felder der Magnete 6 und 7 verhält, wenn die Magnete 6 und 7 an ihrem freien Ende vorbeibewegt werden.

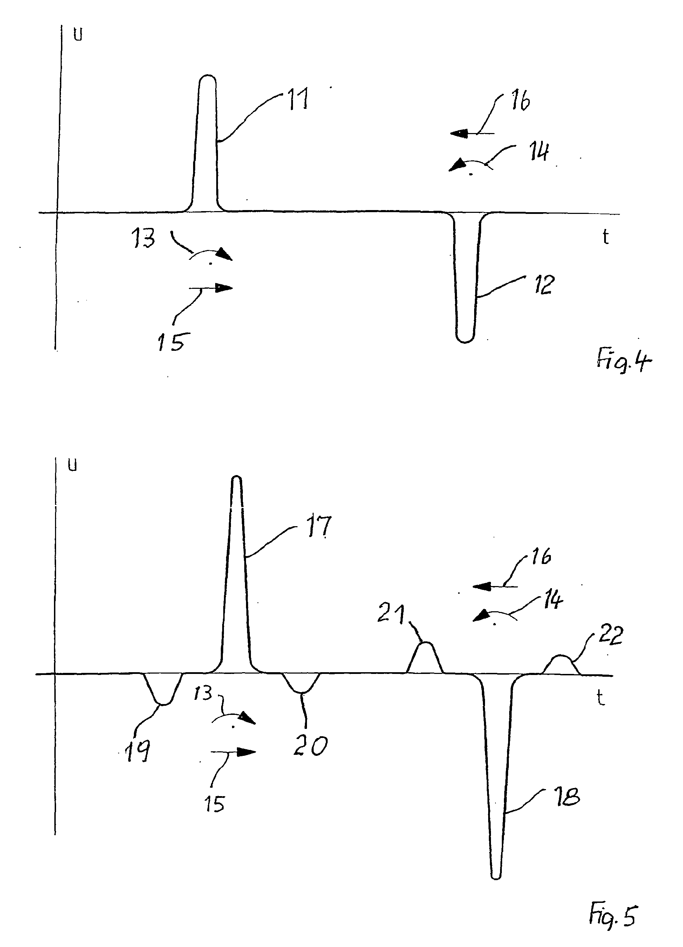

Fig. 3a zeigt die Feder 5 im gestreckten Ruhezustand. Dreht die Hohlwelle 1 sich in Richtung des Pfeiles 10, d. h. im Uhrzeigersinn, so gelangt zunächst der Magnet 6 - wie in Fig. 3b gezeigt - unter das freie Ende der Feder 5 und die Feldlinien 8 des Magneten 6 konzentrieren sich auf der Oberfläche der Feder 5. Wandert die Hohlwelle 1 in die in Fig. 3c dargestellte Position weiter, so wird der frei bewegliche Teil der Feder 5 mitgenommen, da die Feldlinien 8 des Magneten 6 nach dem Reluktanz-Prinzip den ihnen von der Feder 5 gebotenen Weg des geringsten magnetischen Widerstandes suchen. Bewegt sich die Hohlwelle 1 weiter in Drehrichtung, so wird der Punkt erreicht, bei dem die Rückstellkraft der Feder 5 die Mitnahmekraft des Magneten 6 überwindet und die Feder 5 zurückschnellt. Dabei kommt sie in den Einflussbereich des Magneten 7, dessen Feldlinien 9 entgegengesetzt zu den Feldlinien 8 des Magneten 6 verlaufen. Beim Wechsel der Feder 5 zwischen den in den Figuren 3c und 3d dargestellten Positionen, kommt es zu einer schlagartigen Ummagnetisierung der Feder 5, die in der die Feder 5 umgebenden Spule 4 einen kräftigen Spannungsimpuls erzeugt, wie er in Fig. 4 dargestellt ist. Die Fig. 4 zeigt außerdem, dass die Polarität der induzierten Spannungsimpulse 11, 12 von der durch die Pfeile 13 und 14 angedeuteten Drehrichtung abhängt, d. h. davon, ob die Feder 5 zuerst vom Magneten 6 und dann vom Magneten 7 oder umgekehrt zuerst vom Magneten 7 und dann vom Magneten 6 beaufschlagt wird. Es versteht sich, dass bei einer Linearbewegung im Sinne der Pfeile 15, 16 ebenfalls Spannungsimpulse 11, 12 erzeugt werden.

In Fig. 5 sind die Verhältnisse für den Fall dargestellt, dass die Hohlwelle 1 mit höheren Drehzahlen rotiert. Infolge der erhöhten Geschwindigkeit, mit der die Magnete 6, 7 die Feder 5 passieren, werden ausreichend große Spannungsimpulse 17, 18 unabhängig von der Bewegung der Feder 5 allein schon aufgrund des schnellen magnetischen Polaritätswechsels generiert. Die in Fig. 5 dargestellten Vor- und Nachimpulse 19, 20 bzw. 21, 22 rühren daher, dass es bereits dann, wenn einer der beiden Magnete 6 bzw. 7 unter die Feder 5 gerät, zu einem kleinen Spannungsimpuls kommt, der deutlich kleiner ist als der durch den magnetischen Polwechsel erzeugte Hauptspannungsimpuls.

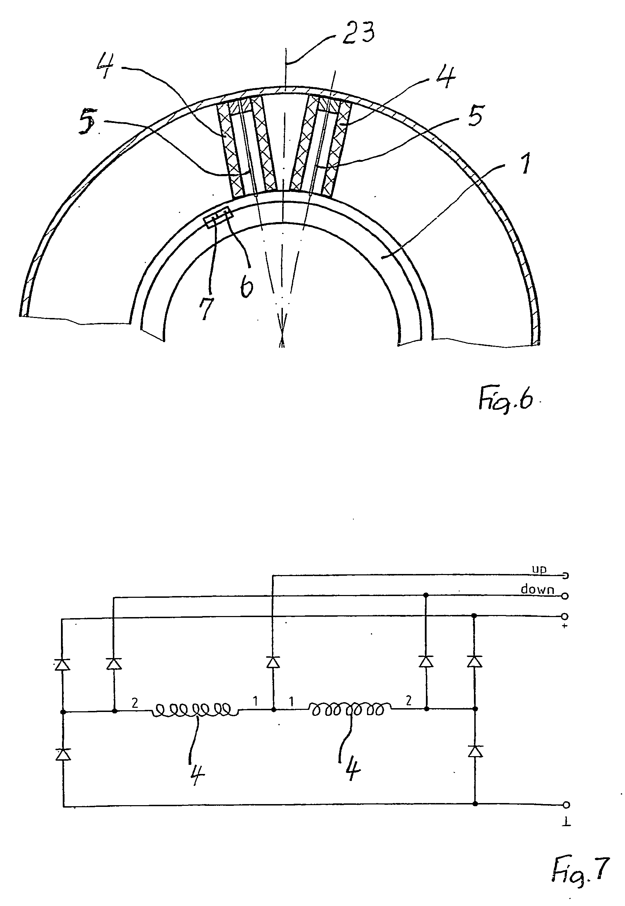

Die beschriebene Vorrichtung ermöglicht es, mit nur einer Feder 5 und einer Spule 4 die Anzahl der Umdrehungen der Hohlwelle 1 und deren Drehrichtung eindeutig zu ermitteln. Soll der Umdrehungszähler mit einem sogenannten Singleturn-Absolutgeber verbunden werden, der, wie der Name sagt, die Absolutposition innerhalb einer Umdrehung erfasst, während der Umdrehungszähler die Anzahl der zurückgelegten vollen Umdrehungen zählt, so sollten wie in Fig. 6 gezeigt, mindestens zwei mit Federn 5 ausgestattete Spulen 4 vorgesehen werden. Um in diesem Fall eine eindeutige Synchronisation zwischen dem Singleturn- und dem Multiturn-Teil zu gewährleisten, wird der Singleturn-Geber so auf der Hohlwelle 1 positioniert, dass sein Übergang von "volle Umdrehung" (=360°) auf "Beginn der Umdrehung" (=0°) mit der Symmetrieachse 23 zusammenfällt.

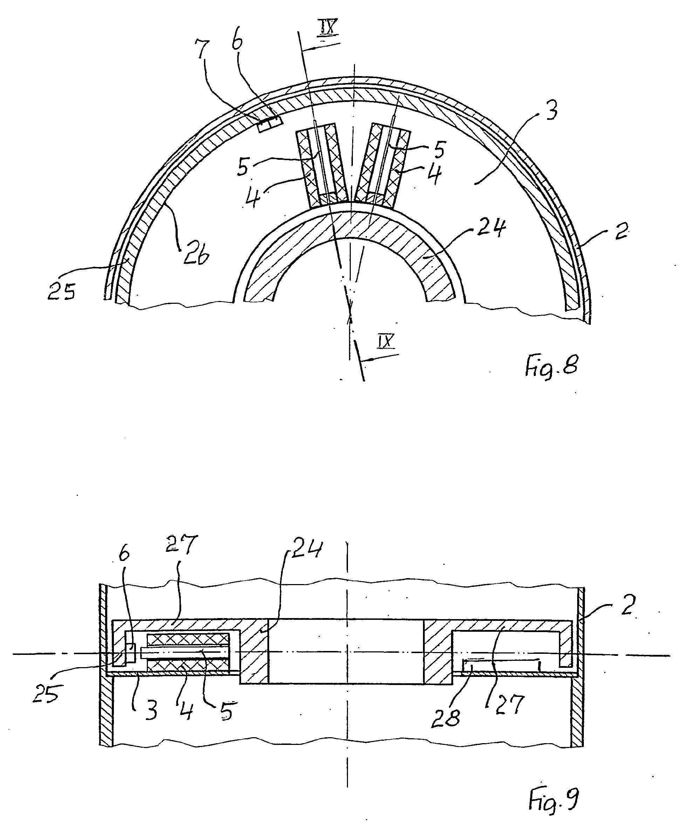

Fig. 7 zeigt, wie die in den elektrisch antiseriell verbundenen Spulen 4 der Anordnung gemäß Fig. 6 erzeugten Spannungen durch Dioden gleichgerichtet und zur Versorgung einer nicht dargestellten elektronischen Zählschaltung genutzt werden können und wie sich auf einfache Weise Aufwärts- ("up") und Abwärts- ("down") Signale gewinnen lassen.

Während es sich bei den bisher beschriebenen Ausführungsformen um als sogenannte Innenläufer bezeichnete Umdrehungszähler handelt, ist in den Figuren 8 und 9 ein Umdrehungszähler der sogenannten Außenläufer-Bauart dargestellt. Bei dieser Bauart ist die Hohlwelle 24 mit einem sie mindestens partiell umgebenden Bund 25 umgeben, an dessen der Hohlwelle 24 zugewandter Innenwand 26 die zusammen mit der Hohlwelle 24 umlaufenden Magnete 6 und 7 befestigt sind. Diese Lösung hat nicht nur den Vorteil, dass die auf die Magnete 6, 7 bei höheren Drehzahlen ausgeübten Fliehkräfte gut aufgenommen werden, sondern dass darüber hinaus magnetische Störfelder vom ringförmigen Bund 25 und dem diesen mit der Hohlwelle 24 verbindenden Flansch 27 von den Spulen 4 und der auf der Leiterplatte 3 untergebrachten elektronischen Schaltung 28 abgeschirmt werden.

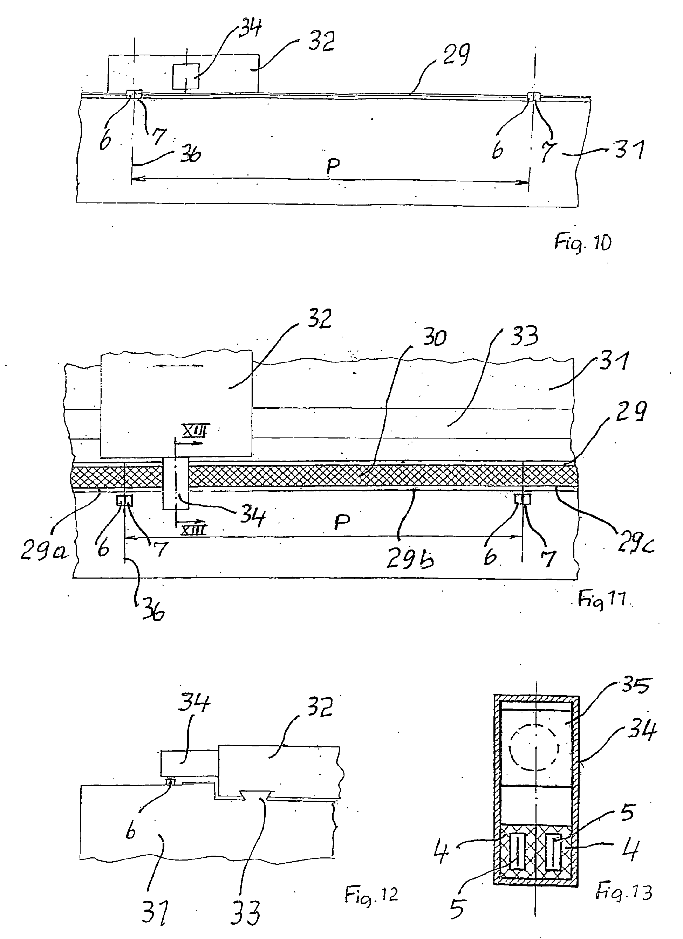

Die Figuren 10 bis 12 zeigen eine weitere Einsatzmöglichkeit der die Funktion eines Spannungsgenerators ausübenden Vorrichtung. In den Figuren ist 29 ein Linear-Maßstab, der zur Ermöglichung einer Absolut-Messung mit einer bekannten und daher nicht näher zu erläuternden, durch sich kreuzende Striche angedeuteten Kodierung 30 versehen ist. Der am Bett 31 einer Werkzeugmaschine angebrachte Linear-Maßstab besteht aus mehreren, seine kostengünstige Herstellung ermöglichenden Abschnitten 29 a, 29 b bzw. 29 c. Im Bereich der Stoßstellen zwischen den vorgenannten Abschnitten sind neben dem Maßstab 29 aus jeweils zwei Magneten 6 und 7 bestehende Magnetpaare angeordnet, deren Mittenabstand P der Länge jeweils eines Abschnittes 29 a, 29 b bzw. 29 c des Maßstabes 29 entspricht. Der gegenüber den Magnetpaaren 6, 7 eine Bewegung ausführende Gegenstand wird im dargestellten Fall von einem Schlitten 32 gebildet, der längs Führungsbahnen 33 - von denen nur eine gezeigt ist - hin- und herbewegbar ist. Am Schlitten 32 ist ein Sensorknopf 34 befestigt, der - wie in Fig. 13 erkennbar - eine die Kodierung lesende Abtastelektronik 35 und zwei Spulen 4 aufweist, von denen eine jede wiederum eine Feder 5 umschließt.

Wenn der Sensorkopf 34 das in den Figuren 10 und 11 links gezeichnete Magnetpaar 6, 7 von links nach rechts passiert, so melden die Spulen 4, 4 einem nicht-flüchtigen Speicher einer Auswerteelektronik, dass die Trennlinie 36 zwischen den Abschnitten 29 a und 29 b überschritten wurde und sich der Sensorkopf 34 im Bereich des Abschnittes 29 b befindet. Dort ermittelt die Abtastelektronik 35 eine absolute Position, die innerhalb des Abschnittes 29 b, d. h. im Bereich des Abstandes P, nur einmal auf dem Abschnitt 29 b vertreten ist. Aus dem im nicht-flüchtigen Speicher abgelegten, mit Hilfe der beiden Spulen 4 gewonnenen Wert und dem aktuell von der Abtastelektronik 35 gelesenen Wert lässt sich die absolute Position des Schlittens 32 auf dem Bett 31 der Werkzeugmaschine ermitteln.

Die Verwendung von zwei aus jeweils einer Feder 5 und einer Spule 4 bestehenden Weg-Messsystemen erweist sich insofern als sinnvoll, als durch den räumlichen Abstand der Federn 5 eventuelle Lagefehler der Magnete 6, 7 im Rahmen zulässiger Einbautoleranzen nicht zu Fehlern bei der Identifikation der Abschnitte a - c des Linearmaßstabes 29 führen. Die beschriebene Lösung erlaubt es, lange und folglich teure Linearmaßstäbe durch mehrere kurze, mit deutlich geringerem Aufwand herstellbare Linearmaßstäbe zu ersetzen.

Nähert sich der Magnet 6 im Falle der Figuren 3a bis 3d der Blattfeder 5, so kommt es aufgrund der Anziehungskraft zwischen dem Magneten 6 und der Blattfeder 5 zu einer gewissen Beschleunigung der Antriebswelle des Umdrehungszählers. Die Beschleunigung wird durch eine Verzögerung abgelöst, sobald die Blattfeder 5 vom Magneten 6 mitgenommen und, wie in Figur 3c dargestellt, ausgelenkt wird. Die Verzögerung entfällt schlagartig, sobald das freie Ende der Blattfeder 5 gewissermaßen zum Magneten 7 hinüber springt. Der Wegfall der Verzögerung erstreckt sich nur über eine kurzen Augenblick, da anschließend der Magnet 7 die Blattfeder 5 erneut auslenkt, was wiederum zu einer Verzögerung der Bewegung der Welle des Umdrehungszählers führt. Diese Verzögerung fällt weg, sobald die Rückstellkraft der Blattfeder 5 die Anziehungskraft zwischen ihr und dem Magneten 7 übersteigt. Wie eingangs bereits erwähnt, sind die aufgrund der zuvor beschriebenen Zusammenhänge entstehenden Drehmomentpulsationen insbesondere bei Umdrehungszählern, mit denen relativ kleine Antriebe ausgestattet werden, störend und * dies ganz abgesehen davon, dass die Blattfeder unter der Einwirkung der Pulsationen zum Schwingen angeregt wird und es zu einer Geräuschentwicklung kommen kann.

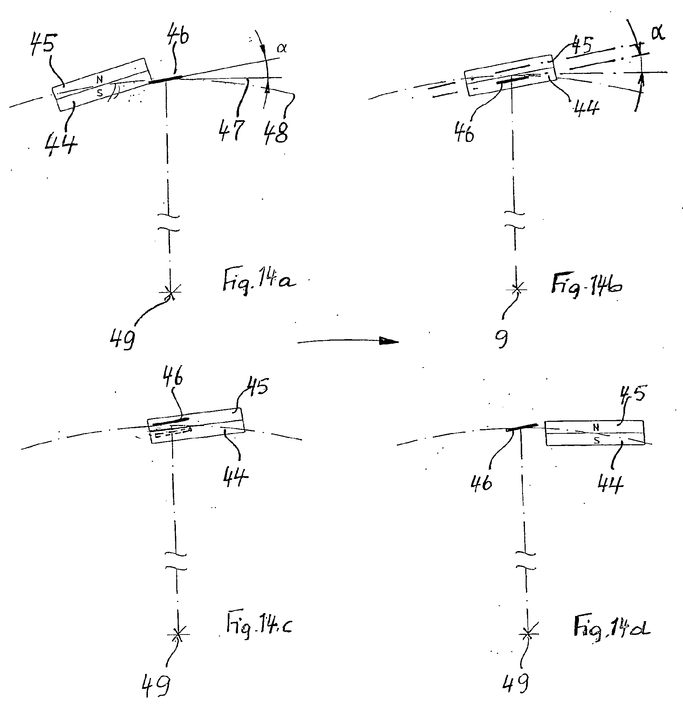

In den Figuren 14a bis 14d ist schematisch dargestellt, wie sich die geschilderten Drehmomentpulsationen im Sinne der Erfindung in einer Weise abschwächen lassen, dass sie nicht mehr störend in Erscheinung treten. Anders als im Falle der Figuren 3a bis 3d nehmen in den Figuren 14a bis 14d sowohl die Längsachsen der im Wesentlichen rechteckigen Polflächen der umlaufenden gegenpoligen Permanentmagnete 44, 45 als auch die Stirnflächen der ortsfesten Blattfeder 46 einen Winkel α zur Tangente 47 an die hier als Kreis ausgebildete Bewegungsbahn 48 der Magnete 44, 45 ein. Der Winkel α ist deutlich kleiner als 90° und liegt in der Praxis bei 20 bis 30°. Bewegen sich im dargestellten Fall die Magnete 44, 45 auf die Blattfeder 46 zu, so entsteht lediglich ein geringes beschleunigendes Drehmoment, da die Blattfeder 46 dem Magneten 44 nur ihre Schmalseite zukehrt. Kommt die Blattfeder 46, wie in Figur 14b gezeigt, in den Bereich der Polfläche des Magneten 44, so ist der Magnet 44 bestrebt, die Blattfeder 46 aufgrund des Reluktanz-Effektes möglichst in seiner Mittenachse zu halten. Mit fortschreitender Bewegung des Magneten 44 wird die Blattfeder 46 folglich um einen bestimmten Betrag aus ihrer Ausgangsposition nach innen, d. h. in Richtung der Längsachse 49 des Umdrehungszählers, gedrückt. Übersteigt die Rückstellkraft der Blattfeder 46 die Reluktanzkraft, so springt die Blattfeder 46 aus der in Figur 14c gestrichelt gezeichneten Position in die als Volllinie dargestellte Lage. Hierbei findet der auch bei den zuvor beschriebenen Vorrichtungen zur Erzeugung eines Spannungsimpulses genutzte schlagartige magnetische Flusswechsel statt. Bewegen sich die nebeneinander angeordneten Magnete 44,45 - wie in Figur 14d angedeutet - weiter, so gibt der Magnet 45 die Blattfeder 46 wieder frei. Da die Blattfeder 46 dabei mit ihrer Schmalseite aus dem Einflussbereich des Magneten 45 heraustritt - und dies übrigens in einer Position, die ihrer Ausgangsposition entspricht -, bleibt das bis zum Austritt entstehende Bremsmoment klein.

Bei einer Bewegungsumkehr der Permanentmagnete 44, 45 wird die Blattfeder 46 vom Magneten 45 angezogen und von diesem nach außen ausgelenkt. Sie springt anschließend unter Erzeugung eines Spannungsimpulses zum Magneten 44 über, von dem sie schließlich in der Position gemäß Figur 14a wieder freigegeben wird.

Sowohl die Polflächen der Magnete 44, 45 als auch die den Polflächen bei der Spannungserzeugung zugewandte Stirnfläche der Blattfeder 46 sind - wie bereits erwähnt - im Wesentlichen rechteckig ausgebildet, wobei Krümmungen der Längsseiten der Rechtecke nicht ausgeschlossen sind. Letzteres gilt insbesondere für die sich berührenden Längsseiten der nebeneinander angeordneten Magnete 44, 45. Als vorteilhaft haben sich rechteckige Querschnitte der Magnete 44, 45 erwiesen, deren Länge zwei- bis dreimal größer als die Länge der Blattfeder 46 ist.

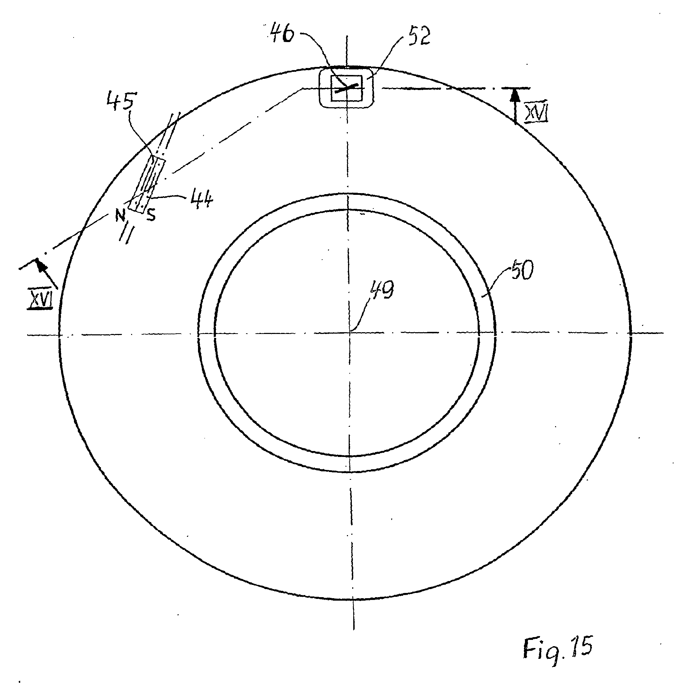

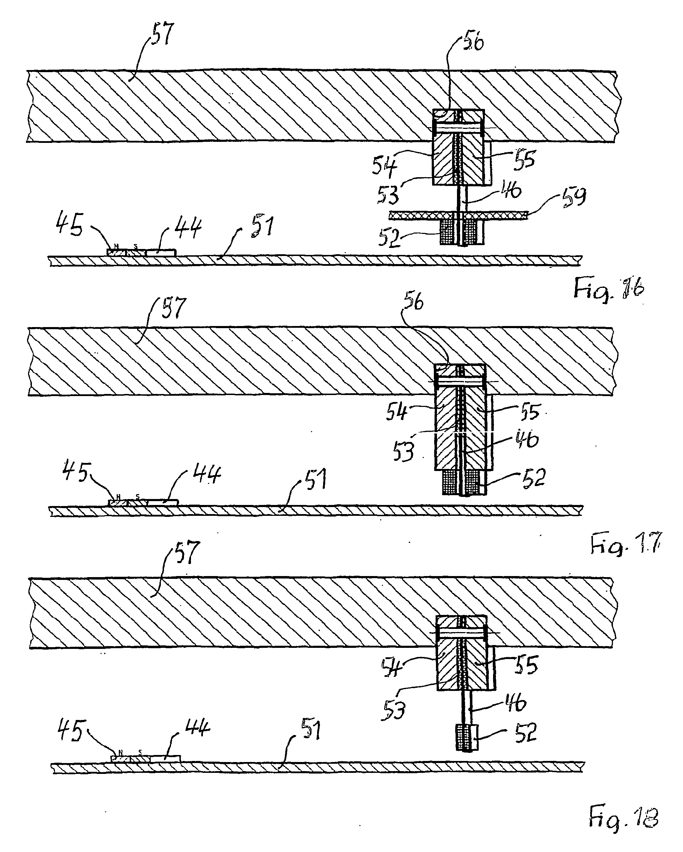

Die Figur 15 zeigt stark schematisiert eine Stirnansicht der für die vorliegende Erfindung wesentlichen Teile eines eine Hohlwelle 50 aufweisenden Umdrehungszählers, wobei ein die Permanentmagnete 44, 45 tragender, mit der Hohlwelle 50 verbundener, in Figur 16 dargestellter, als ringförmige Scheibe ausgebildeter Träger 51 aus Gründen der Übersichtlichkeit weggelassen wurde.

Einzelheiten der Befestigung der Blattfeder 46 und der Anordnung einer sie partiell umgebenden Spule 52 sind der Figur 16 entnehmbar. Wie man erkennen kann, ist das untere Ende der Blattfeder 46 unter Zwischenschaltung eines schwingungsdämpfenden Materiales 53 zwischen zwei, vorzugsweise aus Kunststoff bestehenden Platten 54, 55 eingeklemmt, die in einer Ausnehmung 56 einer Wand 57 des Gehäuses des Umdrehungszähler gelagert sind. Das freie Ende der Blattfeder 46 ragt durch eine Öffnung 58 einer Leiterplatte 59, die u. a. die Spule 52 trägt.

Die Figuren 17 und 18 geben mögliche Modifikationen der Anordnung gemäß Figur 16 wieder. In Figur 17 ist die Spule 52 auf den Stirnflächen der verlängerten Platten 54, 55 gelagert. In Figur 18 wird das freie Ende der Blattfeder 46 als Halter für die Spule 52 genutzt.

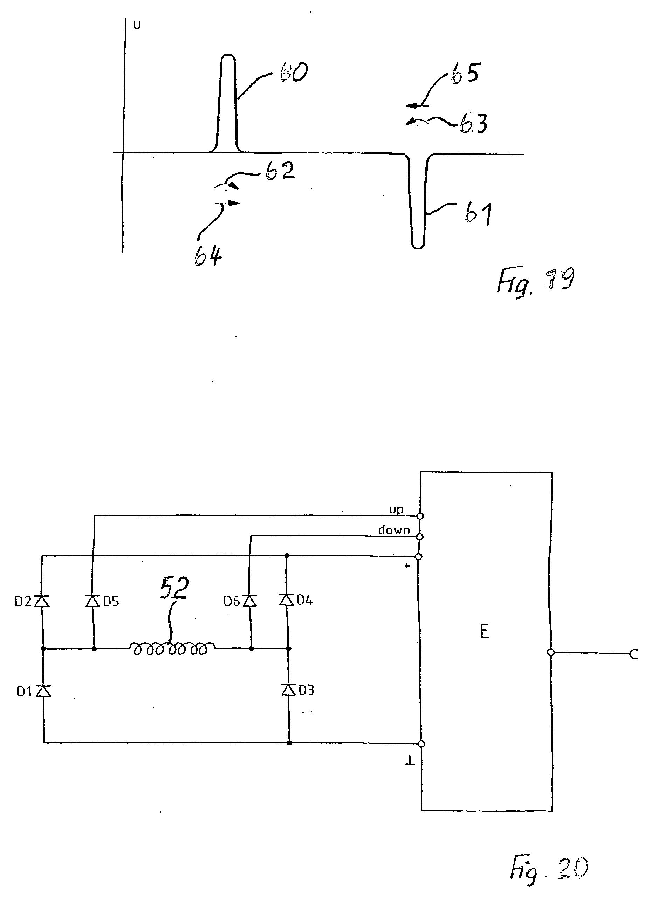

In Figur 19 sind die in der Spule 52 bei langsamen Drehzahlen induzierten Spannungsimpulse 60, 61 in Abhängigkeit von den durch Pfeile 62, 63 angedeuteten Drehrichtungen dargestellt. Es versteht sich, dass auch bei Linearbewegungen in Richtung der Pfeile 64, 65 einsprechende Spannungsimpulse erzeugt werden.

Fig. 20 zeigt eine Schaltung, mit deren Hilfe die in der Spule 52 erzeugten Spannungsimpulse 60 bzw. 61 durch Dioden D₁ bzw. D₄ gleichgerichtet und einer elektronischen Zählschaltung E als Versorgungsspannung zugeführt werden. Über die Dioden D₅ und D₆ wird die als Mikroprozessorschaltung ausgebildete Zählschaltung in Abhängigkeit von der Polarität der erzeugten Spannungsimpulse zusätzlich mit einem Aufwärts- ("up") bzw. Abwärts- ("down") Signal versorgt.

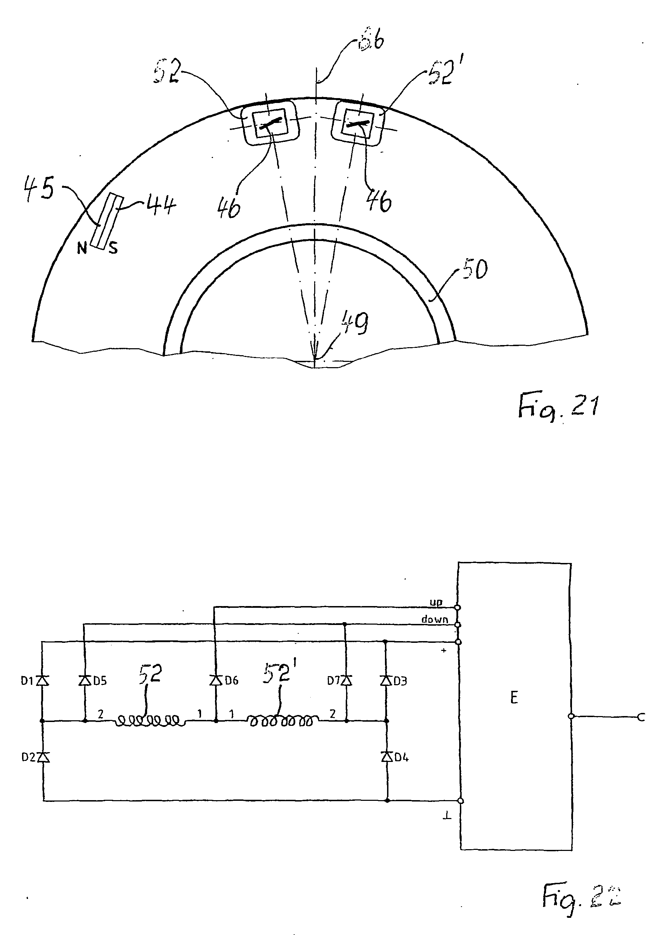

Die beschriebene Vorrichtung ermöglicht es, mit nur einer Feder 46 und einer Spule 52 die Anzahl der Umdrehungen der Hohlwelle 50 und deren Drehrichtung eindeutig zu ermitteln. Soll der Umdrehungszähler mit einem sogenannten Singleturn-Absolutgeber verbunden werden, der, wie der Name sagt, die Absolutposition innerhalb einer Umdrehung erfasst, während der Umdrehungszähler die Anzahl der zurückgelegten vollen Umdrehungen zählt, so sollten, wie in Fig. 21 gezeigt, wiederum mindestens zwei mit Federn 46 ausgestattete Spulen 52 und 52' vorgesehen werden. Um in diesem Fall eine eindeutige Synchronisation zwischen dem Singleturnteil und dem Umdrehungszähler zu gewährleisten, wird der Singleturnteil auch in diesem Fall so auf der Hohlwelle 50 positioniert, dass sein Übergang von "volle Umdrehung" (=360°) auf "Beginn der Umdrehung" (=0°) mit der Symmetrieachse 66 zusammenfällt.

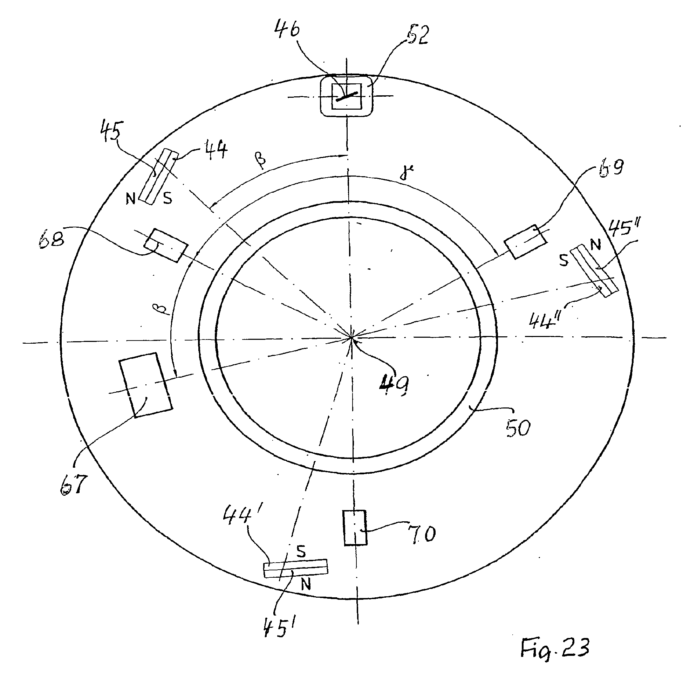

Fig. 22 zeigt, wie die in den elektrisch antiseriell verbundenen Spulen 52 der Anordnung gemäß Fig. 21 erzeugten Spannungen durch Dioden D₁ - D₄ gleichgerichtet und zur Versorgung einer elektronischen Zählschaltung E genutzt werden können und wie sich auf einfache Weise über die Dioden D₁ - D₄ Aufwärts- ("up") und Abwärts- ("down") Signale gewinnen lassen.

Während bei den zuvor beschriebenen Ausführungsformen die in den Spulen 52 erzeugten Spannungsimpulse sowohl zur Energieversorgung der Zählschaltung E als auch zur Umdrehungszählung genutzt wurden, ist in Figur 23 eine Lösung dargestellt, bei der die die Blattfeder 46 partiell umschließende Spule 52 und drei Permanentmagnetpaare 44, 45; 44', 45' und 44", 45" lediglich zur Energieversorgung einer Zählschaltung E genutzt werden. Zur Drehzahlerfassung dienen demgegenüber ein Aktuator 67 und drei von ihm ansteuerbare, ortsfeste Sensoren 68, 69 und 70. Wenn sich bei der Vorrichtung gemäß Figur 23 die Magnete 44, 45 im Uhrzeigersinn um einen Winkel β bewegen, so erreichen sie die Spule 52 und die Blattfeder 46 zu einem Zeitpunkt, zu dem der Aktuator 67 nach Zurücklegung einer Bewegung um den gleichen Winkel β den Sensor 68 beaufschlagt. Dreht sich der auch in Figur 23 aus Übersichtlichkeitsgründen weggelassene, in der Praxis oberhalb der Zeichnungsebene rotierende Träger für die Magnetpaare 44, 45; 44', 45' und 44", 45" und den Aktuator 67 um einem Winkel γ von 120° weiter, so betätigen nunmehr die Magnete 44', 45' die Blattfeder 46, während der Aktuator 67 gleichzeitig den Sensor 69 aktiviert. Bei einer weiteren Drehung des Trägers um einen Winkel γ wirkt das Magnetpaar 44", 45" auf die Feder 46 und der Aktuator 67 spricht den Sensor 70 an.

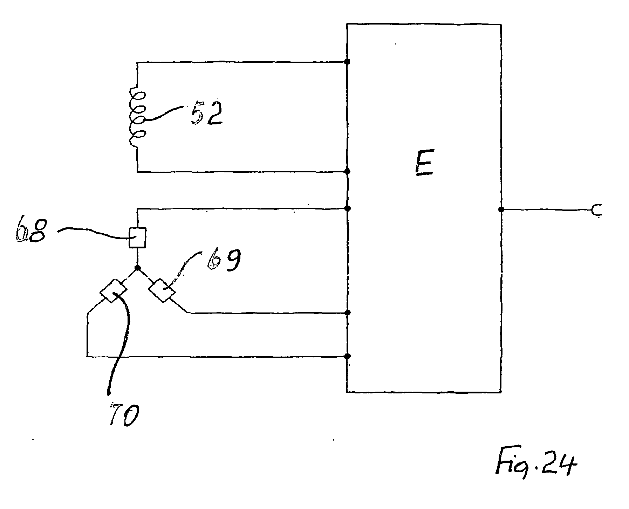

Im dargestellten, übrigens nicht zwingend erforderlichen Fall, sind sowohl die um die Achse 49 des Umdrehungszählers rotierenden Magnetpaare 44, 45; 44', 45' und 44", 45" als auch die ortsfesten Sensoren 68, 69, 70 um jeweils 120° zueinander versetzt angeordnet, wobei der Sensor 70 der Spule 52 diametral gegenüberliegt. Die Feder 46 wird bei niedrigen Drehzahlen folglich pro Umdrehung der Hohlwelle 50 des Umdrehungszählers dreimal angesprochen. Bei jedem Ansprechen der Feder 46 bzw. der Spule 52 wird gleichzeitig einer der Sensoren 68, 69, 70 aktiviert und von der in Figur 24 dargestellten Mikroprozessorschaltung E deren Status abgefragt. Aus der Reihenfolge der vom Aktuator 67 aktivierten Sensoren 68, 69 und 70 erkennt ein Mikroprozessor in bekannter Weise die Drehrichtung und leitet daraus Aufwärts- oder Abwärts-Zählimpulse ab. Störimpulse, die beispielsweise bei der Betätigung einer Motor-Feststellbremse in der Spule 52 auftreten können, führen nicht zu Fehlzählungen, da ein Zählvorgang nur dann stattfindet, wenn die Spule 52 einen Spannungsimpuls liefert und gleichzeitig einer der Sensoren 68, 69 und 70 angesteuert wird.

Der Aktuator 67 kann ein Magnet sein, der beispielsweise MR- oder Hall-Sensoren oder auch Reedkontakte ansteuert. Möglich ist allerdings auch die Verwendung photosensibler Sensoren. In diesem Fall befindet sich an der Stelle des Aktuators 67 eine Öffnung im Träger für die Magnetpaare, durch die ein Lichtstrahl von gegenüber den Sensoren wie diese ortsfest angeordneten Leuchtdioden treten kann.

## Patentansprüche

1. Vorrichtung zum Erfassen von Bewegungen und/oder Positionen eines Gegenstandes, bei der in Abhängigkeit von den Bewegungen und/oder Positionen des Gegenstandes in mindestens einer Spule durch mindestens ein, eine Relativbewegung zur Spule ausführendes und diese beaufschlagendes Magnetfeld jeweils eine Spannungsimpuls erzeugt wird, wobei die Spule mindestens partiell eine aus magnetisch leitendem Material bestehende Feder umschließt, die unter dem Einfluß des Magnetfeldes aufgrund des Reluktanz-Effektes eine Hin- und Herbewegung ausführt, **dadurch gekennzeichnet, dass** das Magnetfeld von einem Magnetpaar aus zwei benachbarten und gegenpoligen Magneten (6, 7) erzeugt wird, die in Richtung der Bewegung des Gegenstandes (1, 24, 32) hintereinander angeordnet sind und deren Längsachsen ebenso wie die Längsachsen der Spule (4) im Wesentlichen senkrecht zur Bewegungsrichtung des Gegenstandes orientiert sind und dass die Hin- und Herbewegung der Feder (5) einen den jeweiligen Spannungsimpuls erzeugenden Polaritätswechsel des Magnetfeldes zur Spule (4) bewirkt.

2. Vorrichtung nach dem Oberbegriff des Anspruches 1, **dadurch gekennzeichnet, dass** das Magnetfeld von einem Magnetpaar erzeugt wird, dessen Magnete (44, 45) in Richtung ihrer Relativbewegung zur Spule (52) betrachtet nebeneinander angeordnet sind, wobei sowohl die Polflächen der Magnete (44, 45) als auch die den Polflächen der Magnete (44, 45) zugewandte Stirnfläche der Blattfeder (46) im Wesentlichen als Rechtecke ausgebildet sind, deren Längsachsen einen Winkel (α) von weniger als 60° zur Tangente an die Bewegungsbahn (48) der Magnete (44, 45) aufweisen, und dass die Hin- und Herbewegung der Feder (46) einen den jeweiligen Spannungsimpuls erzeugenden Polaritätswechsel des Magnetfeldes in der Spule (52) bewirkt.

3. Vorrichtung nach Anspruch 1 oder 2, **dadurch gekennzeichnet, dass** die Feder (5; 46) als eine an einem Ende eingespannte Blattfeder ausgebildet ist.

4. Vorrichtung nach einem der Ansprüche 1 bis 3, **dadurch gekennzeichnet, dass** die einander unmittelbar benachbarten Magnete (6, 7; 44, 45) fest mit einem bewegten Träger (1; 26; 31; 51) verbunden sind.

5. Vorrichtung nach einem der Ansprüche 1 bis 4, **dadurch gekennzeichnet, dass** der sich bewegende Gegenstand (1) von der Welle eines Umdrehungszählers gebildet wird.

6. Vorrichtung nach Anspruch 5, **dadurch gekennzeichnet, dass** die Welle (1) des Umdrehungszählers mit einem sie mindestens partiell umgebenden, konzentrischen Bund (25) versehen ist, an dessen der Welle (1) zugewandter Innenwand (26) die Magnete (6, 7) befestigt sind.

7. Vorrichtung nach Anspruch 6, **dadurch gekennzeichnet, dass** im Raum zwischen der Innenwand (26) des Bundes (25) und der Welle (1) mindestens eine mit einer Feder (5) versehene Spule (4) angeordnet ist.

8. Vorrichtung nach einem der Ansprüche 1, 3 oder 4, **dadurch gekennzeichnet, dass** mindestens eine mit einer Feder (5) versehene Spule (4) in einem Sensorkopf (34) angeordnet ist, der mit einem sich längs eines Maßstabes (29) bewegenden Gegenstand (32) verbunden ist, wobei der durch den Sensorkopf (34) abzutastende Maßstab aus mindestens zwei Abschnitten (29 a, 29 b) besteht, an deren Stoß- bzw Fügestelle jeweils ein mit der Spule (4) zusammenwirkendes Magnetpaar (6, 7) angeordnet ist.

9. Vorrichtung nach Anspruch 8, **dadurch gekennzeichnet, dass** der Sensorkopf (34) mit zwei, jeweils eine Feder (5) umschließenden Spulen (4, 4) ausgestattet ist.

10. Vorrichtung nach einem der Ansprüche 8 oder 9, **dadurch gekennzeichnet, dass** der Maßstab (29) als mit einer von einer Abtastelektronik (35) des Sensorkopfes (34) lesbaren, absoluten Kodierung (30) versehener Linearmaßstab ausgebildet ist.

11. Vorrichtung nach einem der Ansprüche 8 bis 10, **dadurch gekennzeichnet, dass** der sich bewegende Gegenstand vom Schlitten (32) einer Werkzeugmaschine gebildet wird.

12. Vorrichtung nach einem der Ansprüche 1 bis 11, **dadurch gekennzeichnet, dass** sie die Funktion eines Spannungsgenerators ausübt.

13. Vorrichtung nach einem der Ansprüche 1 bis 12, **dadurch gekennzeichnet, dass** die erzeugten Spannungsimpulse als einer elektronischen Zählschaltung zuführbare Signale nutzbar sind.

14. Vorrichtung nach Anspruch 2, **dadurch gekennzeichnet, dass** die Längsachsen der im Wesentlichen rechteckigen Polflächen der Magnete (44, 45) einen Winkel (α) von 20 bis 30° zur Tangente an die Bewegungsbahn der Magnete (44, 45) einnehmen.

15. Vorrichtung nach Anspruch 2 oder 14, **dadurch gekennzeichnet, dass** sowohl die Breite als auch die Länge der Polfläche der Magnete (44, 45) größer als die Breite und Länge der Stirnfläche der Blattfeder (46) ist.

16. Vorrichtung nach Anspruch 15, **dadurch gekennzeichnet, dass** die Länge und die Breite der Polflächchen der Magnete (44, 45) jeweils ein Vielfaches der Länge und Breite der Stirnfläche der Blattfeder (46) beträgt.

17. Vorrichtung nach einem der Ansprüche 2 oder 14 bis 16, **dadurch gekennzeichnet, dass** die Blattfeder (46) an ihrem den sie passierenden Polflächen der Magnete (44, 45) abgewandten Ende zwischen zwei mit Dämpfungseinlagen versehenen Halteplatten (54, 55) eingespannt ist.

18. Vorrichtung nach einem der Ansprüche 1 bis 17, **dadurch gekennzeichnet, dass** das freie Ende der Feder (5; 46) leicht über das Ende der sie umgebenden Spule (4; 52) vorsteht.

19. Vorrichtung nach einem der Ansprüche 1 bis 7 oder 14 bis 18, **dadurch gekennzeichnet, dass** der Träger (51) von einer mit der Welle (50) eines Umdrehungszählers verbundenen Scheibe gebildet wird.

20. Vorrichtung nach einem der Ansprüche 1 bis 19, **dadurch gekennzeichnet, dass** den paarweise angeordneten Magneten (6, 7; 44, 45) mehrere mit jeweils einer Feder (5; 46) ausgestattete Spulen (4, 4'; 52, 52') zugeordnet sind.

21. Vorrichtung nach Anspruch 20, **dadurch gekennzeichnet, dass** den mit der Welle (1; 50) umlaufenden Magneten (6, 7; 44, 45) zwei mit jeweils einer Feder (5; 46) ausgestattete Spulen (4, 4'; 52, 52') zugeordnet sind, deren Abstand voneinander größer ist als die Erstreckung der Magnete (6, 7; 44, 45) in Richtung ihrer Bewegung

22. Vorrichtung nach Anspruch 20 oder 21, **dadurch gekennzeichnet, dass** jeweils zwei Spulen (4, 4'; 52, 52') elektrisch antiseriell miteinander verbunden sind.

23. Vorrichtung nach einem der Ansprüche 1 bis 7 oder 14 bis 22, **dadurch gekennzeichnet, dass** sie mit durch mindestens einen Aktuator (67) beaufschlagbaren Sensoren (68 - 70) versehen ist, die zum Erfassen der Bewegungen und/oder Positionen eines Gegenstandes dienen, während die Magnete (44, 45; 44', 45'; 44", 45") lediglich zur Energieversorgung einer Mikroprozessorschaltung (E) genutzt werden.

24. Vorrichtung nach Anspruch 23, **dadurch gekennzeichnet, dass** der Aktuator (67) als Magnet und die Sensoren als MR- oder Hall-Sensoren (68 - 70) ausgebildet sind.

## Claims

1. An apparatus for the detection of movements and/or positions of an object, in which a voltage pulse is in each case produced as a function of the movements and/or positions of the object in at least one coil, by means of at least one magnetic field which carries out a relative movement with respect to the coil and acts on it, with the coil at least partially surrounding a spring which is composed of magnetically permeable material and carries out a reciprocating movement under the influence of the magnetic field, on the basis of the reluctance effect, **characterized in that** the magnetic field is produced by a magnet pair comprising two adjacent magnets (6, 7) of opposite polarity, which are arranged one behind the other in the direction of movement of the object (1, 24, 32) and whose longitudinal axes, in the same way as the longitudinal axes of the coil (4), are oriented essentially at right angles to the movement direction of the object, and **in that** the reciprocating movement of the spring (5) causes a polarity change, which produces the respective voltage pulse, in the magnetic field with respect to the coil (4).

2. The apparatus as claimed in the precharacterizing clause of claim 1, **characterized in that** the magnetic field is produced by a magnet pair whose magnets (44, 45) are arranged alongside one another when viewed in the direction of their relative movement with respect to the coil (52), with both the pole surfaces of the magnets (44, 45) and that end surface of the leaf spring (46) which faces the pole surfaces of the magnets (44, 45) being essentially in the form of rectangles, whose longitudinal axes include an angle (α) of less than 60° with the tangent to the movement path (48) of the magnets (44, 45), and **in that** the reciprocating movement of the spring (46) causes a polarity change, which produces the respective voltage pulse, in the magnetic field in the coil (52).

3. The apparatus as claimed in claim 1 or 2, **characterized in that** the spring (5; 46) is in the form of a leaf spring which is clamped in at one end.

4. The apparatus as claimed in one of claims 1 to 3, **characterized in that** the mutually directly opposite magnets (6, 7; 44, 45) are firmly connected to a moving mount (1; 26; 31; 51).

5. The apparatus as claimed in one of claims 1 to 4, **characterized in that** the moving object (1) is formed by the shaft of a tachometer.

6. The apparatus as claimed in claim 5, **characterized in that** the shaft (1) of the tachometer is provided with a concentric collar (25) which at least partially surrounds it and on whose inner wall (26) facing the shaft (1) the magnets (6, 7) are mounted.

7. The apparatus as claimed in claim 6, **characterized in that** at least one coil (4), which is provided with a spring (5), is arranged in the space between the inner wall (26) of the collar (25) and the shaft (1).

8. The apparatus as claimed in one of claims 1, 3 or 4, **characterized in that** at least one coil (4), which is provided with a spring (5), is arranged in a sensor head (34) which is connected to an object (32) which moves along a scale (29), with the scale to be scanned by the sensor head (34) comprising at least two sections (29a, 29b) at whose abutment or joining point a magnet pair (6, 7), which interacts with the coil (4), is in each case arranged.

9. The apparatus as claimed in claim 8, **characterized in that** the sensor head (34) is equipped with two coils (4, 4) which each surround one spring (5).

10. The apparatus as claimed in one of claims 8 or 9, **characterized in that** the scale (29) is in the form of a linear scale which is provided with an absolute coding (30) which can be read by scanning electronics (35) of the sensor head (34).

11. The apparatus as claimed in one of claims 8 to 10, **characterized in that** the moving object is formed by the carriage (32) of a machine tool.

12. The apparatus as claimed in one of claims 1 to 11, **characterized in that** the apparatus carries out the function of a voltage generator.

13. The apparatus as claimed in one of claims to 12, **characterized in that** the voltage pulses which are produced can be used as signals which can be supplied to an electronic counting circuit.

14. The apparatus as claimed in claim 2, **characterized in that** the longitudinal axes of the essentially rectangular pole surfaces of the magnets (44, 45) include an angle (α) of 20 to 30° with the tangent to the movement path of the magnets (44, 45).

15. The apparatus as claimed in claim 2 or 14, **characterized in that** both the width and the length of the pole surface of the magnets (44, 45) is greater than the width and the length of the end surface of the leaf spring (46).

16. The apparatus as claimed in claim 15, **characterized in that** the length and the width of the pole surfaces of the magnets (44, 45) are in each case a multiple of the length and width of the end surface of the leaf spring (46).

17. The apparatus as claimed in one of claims 2 or 14 to 16, **characterized in that** the leaf spring (46) is clamped in at its end facing away from those pole surfaces of the magnets (44, 45) which pass by it, between two holding plates (54, 55) which are provided with damping inserts.

18. The apparatus as claimed in one of claims 1 to 17, **characterized in that** the free end of the spring (5; 46) projects slightly beyond the end of the coil (4; 52) which surrounds it.

19. The apparatus as claimed in one of claims 1 to 7 or 14 to 18, **characterized in that** the mount (51) is formed by a disk which is connected to the shaft (50) of a tachometer.

20. The apparatus as claimed in one of claims 1 to 19, **characterized in that** the magnets (6, 7; 44, 45), which are arranged in pairs, are associated with a plurality of coils (4, 4'; 52, 52') which are each equipped with one spring (5; 46).

21. The apparatus as claimed in claim 20, **characterized in that** the magnets (6, 7; 44, 45), which revolve with the shaft (1; 50), have two associated coils (4, 4'; 52, 52'), which are each equipped with one spring (5; 46), and the distance between the coils (4, 4'; 52, 52') is greater than the extension of the magnets (6, 7; 44, 45) in the direction of their movement.

22. The apparatus as claimed in claim 20 or 21, **characterized in that** two coils (4, 4'; 52, 52') are in each case electrically connected back-to-back in series with one another.

23. The apparatus as claimed in one of claims 1 to 7 or 14 to 22, **characterized in that** the apparatus is provided with sensors (68-70) which can be acted on by means of at least one actuator (67) and are used for the detection of the movements and/or positions of an object, while the magnets (44, 45; 44', 45; 44", 45") are used only to supply power to a microprocessor circuit (E).

24. The apparatus as claimed in claim 23, **characterized in that** the actuator (67) is in the form of a magnet, and the sensors are in the form of MR or Hall sensors (68-70).

## Revendications

1. Dispositif de détection de mouvements et/ou de positions d'un objet dans lequel, en fonction des mouvements et/ou des positions de l'objet, une impulsion de tension est produite dans au moins une bobine par au moins un champ magnétique exécutant un mouvement relatif par rapport à la bobine et appliqué à celle-ci, la bobine renfermant au moins partiellement un ressort en matériau magnéto-conducteur qui, sous l'effet du champ magnétique, exécute un mouvement de va-et-vient en raison de l'effet de réluctance, **caractérisé en ce que** le champ magnétique est produit par une paire d'aimants formée par deux aimants adjacents et à polarité opposée (6, 7), qui sont disposés l'un derrière l'autre dans le sens du mouvement de l'objet (1, 24, 32) et dont les axes longitudinaux, tout comme les axes longitudinaux de la bobine (4), sont orientés essentiellement perpendiculairement au sens du mouvement de l'objet, et **en ce que** le mouvement de va-et-vient du ressort (5) engendre une inversion de polarité du champ magnétique appliqué à la bobine (4) produisant l'impulsion de tension.

2. Dispositif selon le préambule de la revendication 1, **caractérisé en ce que** le champ magnétique est produit par une paire d'aimants, dont les aimants (44, 45), vus dans le sens de leur mouvement relatif par rapport à la bobine (52), sont disposés côte à côte, dans lequel aussi bien les faces polaires des aimants (44, 45) que la face frontale du ressort à lame (46) orientée vers les faces polaires des aimants (44, 45) sont réalisées essentiellement sous forme de rectangles, dont les axes longitudinaux forment un angle (α) inférieur à 60° par rapport à la tangente de la trajectoire (48) des aimants (44, 45), et **en ce que** le mouvement de va-et-vient du ressort (46) engendre une inversion de polarité du champ magnétique dans la bobine (52) fournissant l'impulsion de tension respective.

3. Dispositif selon la revendication 1 ou 2, **caractérisé en ce que** le ressort (5 ; 46) est réalisé sous la forme d'un ressort à lame encastré au niveau d'une extrémité.

4. Dispositif selon l'une quelconque des revendications 1 à 3, **caractérisé en ce que** les aimants directement adjacents l'un à l'autre (6, 7 ; 44, 45) sont solidement reliés à un support mobile (1 ; 26 ; 31 ; 51).

5. Dispositif selon l'une quelconque des revendications 1 à 4, **caractérisé en ce que** l'objet en mouvement (1) est formé par l'arbre d'un compte-tours.

6. Dispositif selon la revendication 5, **caractérisé en ce que** l'arbre (1) du compte-tours est pourvu d'une bride (25) concentrique l'entourant au moins partiellement, sur la paroi interne (26) orientée vers l'arbre (1) et à laquelle sont fixés les aimants (6, 7).

7. Dispositif selon la revendication 6, **caractérisé en ce qu'**au moins une bobine (4) pourvue d'un ressort (5) est disposée dans l'espace situé entre la paroi interne (26) de la bride (25) et l'arbre (1).

8. Dispositif selon l'une quelconque des revendications 1, 3 ou 4, **caractérisé en ce qu'**au moins une bobine (4) pourvue d'un ressort (5) est disposée dans une tête de capteur (34), qui est reliée à un objet (32) se déplaçant le long d'une échelle (29), dans lequel l'échelle à balayer par la tête de capteur (34) est composée d'au moins deux segments (29a, 29b), à la transition ou à la jonction desquels est disposée une paire d'aimants (6, 7) fonctionnant conjointement avec la bobine (4).

9. Dispositif selon la revendication 8, **caractérisé en ce que** la tête de capteur (34) est équipée de deux bobines (4, 4) renfermant chacune un ressort (5).

10. Dispositif selon l'une quelconque des revendications 8 ou 9, **caractérisé en ce que** l'échelle (29) est réalisée sous forme d'échelle linéaire pourvue d'un codage absolu (30) pouvant être lu par un dispositif électronique de balayage (35) de la tête de capteur (34).

11. Dispositif selon l'une quelconque des revendications 8 à 10, **caractérisé en ce que** l'objet en mouvement est formé par le chariot (32) d'une machine-outil.

12. Dispositif selon l'une quelconque des revendications 1 à 11, **caractérisé en ce qu'**il exerce la fonction de génératrice de tension.

13. Dispositif selon l'une quelconque des revendications 1 à 12, **caractérisé en ce que** les impulsions de tension produites peuvent être exploitées sous forme de signaux pouvant être appliqués à un circuit de comptage électronique.

14. Dispositif selon la revendication 2, **caractérisé en ce que** les axes longitudinaux des faces polaires essentiellement rectangulaires des aimants (44, 45) forment un angle (α) de 20° à 30° par rapport à la tangente de la trajectoire des aimants (44, 45).

15. Dispositif selon la revendication 2 ou 14, **caractérisé en ce que** la largeur ainsi que la longueur des faces polaires des aimants (44, 45) sont supérieures à la largeur et à la longueur de la face frontale du ressort à lame (46).

16. Dispositif selon la revendication 15, **caractérisé en ce que** la longueur et la largeur des faces polaires des aimants (44, 45) s'élèvent respectivement à un multiple de la longueur et de la largeur de la face frontale du ressort à lame (46).

17. Dispositif selon l'une quelconque des revendications 2 ou 14 à 16, **caractérisé en ce que** le ressort à lame (46), au niveau de son extrémité opposée aux faces polaires des aimants (44, 45) passant devant celui-ci, est serré entre deux plaques de serrage (54, 55) pourvues de garnitures d'amortissement.

18. Dispositif selon l'une quelconque des revendications 1 à 17, **caractérisé en ce que** l'extrémité libre du ressort (5; 46) dépasse légèrement de l'extrémité de la bobine (4; 52) qui l'entoure.

19. Dispositif selon l'une quelconque des revendications 1 à 7 ou 14 à 18, **caractérisé en ce que** le support (51) est formé par un plateau relié à l'arbre (50) d'un compte-tours.

20. Dispositif selon l'une quelconque des revendications 1 à 19, **caractérisé en ce que** plusieurs bobines (4, 4' ; 52, 52'), chacune équipée d'un ressort (5 ; 46), sont associées aux aimants (6, 7 ; 44, 45) disposés par paires.

21. Dispositif selon la revendication 20, **caractérisé en ce que** deux bobines (4, 4' ; 52, 52'), chacune équipée d'un ressort (5 ; 46), dont la distance de l'une par rapport à l'autre est supérieure à l'étendue des aimants (6, 7 ; 44, 45) dans le sens de leur mouvement, sont associées aux aimants (6, 7 ; 44, 45) tournant conjointement avec l'arbre (1 ; 50).

22. Dispositif selon la revendication 20 ou 21, **caractérisé en ce que** deux bobines (4, 4' ; 52, 52') sont reliées électriquement l'une à l'autre en anti-série.

23. Dispositif selon l'une quelconque des revendications 1 à 7 ou 14 à 22, **caractérisé en ce qu'**il est pourvu de capteurs (68 à 70), pouvant être excités par au moins un actionneur (67), qui servent à capter les mouvements et/ou les positions d'un objet, tandis que les aimants (44, 45 ; 44', 45' ; 44", 45") ne sont utilisés que pour agir sur un circuit intégré à microprocesseur (E).

24. Dispositif selon la revendication 23, **caractérisé en ce que** l'actionneur (67) est réalisé sous forme d'aimant et les capteurs sont réalisés sous forme de capteurs magnétorésistifs ou à effet Hall (68 à 70).
